# FASCICULE DE BREVET EUROPEEN

(11) **EP 0 788 206 B1**
(45) Date de publication et mention de la délivrance du brevet: **19.07.2000**
(21) Numéro de dépôt: 97400013.5
(22) Date de dépôt: 06.01.1997
(51) Int. Cl.: H02B 13/035

(54) **Disjoncteur à enceinte métallique à la terre**
Leistungsschalter mit geerdeter Metallkapselung
Circuit breaker with grounded metal clad

(30) Priorité: 02.02.1996 FR 9601280
(43) Date de publication de la demande: 06.08.1997
(73) Titulaire: GEC ALSTHOM T & D SA, 75116 Paris (FR)
(72) Inventeur: Asselin, Luc, 69006 Lyon (FR); Rouilhac,Olivier, 69160 Tassin-la-Demi-Lune (FR)
(74) Mandataire: Gosse, Michel

(56) Documents cités:
- GB-A- 1 573 713
- US-A- 3 796 504
- US-A- 4 045 634
- PATENT ABSTRACTS OF JAPAN vol. 3, no. 90 (E-127), 31 Juillet 1979 & JP 54 068945 A (TOKYO SHIBAURA DENKI), 2 Juin 1979,

## Description

La présente invention concerne un disjoncteur à enceinte métallique à la terre, connu également sous le vocable anglais de "dead tank".

Un tel disjoncteur comprend, pour chaque pôle, une enceinte métallique étanche remplie d'un gaz d'isolement tel que l'hexafluorure de soufre SF6 sous une pression de quelques bars. Un tel disjoncteur est décrit dans le document GB-A-1 573 713.

Le pôle comprend deux traversées isolantes étanches reliées respectivement, à l'intérieur de l'enceinte, à des contacts fixes et à des contacts mobiles. Ces derniers sont actionnés par une tringle traversant l'enceinte de manière étanche et reliée, à l'extérieur de l'enceinte, à une commande.

Un premier problème technique à résoudre est le suivant: dans un appareil du type précité, l'arrivée et la sortie du courant se fait généralement par des barres. Ces barres doivent être reliées aux organes de coupure respectifs de la manière la plus simple, avec une résistance de contact minimale, un coût le plus faible possible et des facilités de montage et de démontage.

Un autre problème se pose dans les traversées des appareils "dead tank"; ces traversées comprennent une barre métallique entourée d'une enveloppe isolante en céramique ou en époxy; dans un exemple de réalisation, l'enveloppe est mise en compression par un assemblage de pièces fixées sur la barre. La barre est parcourue par le courant. En raison des coefficients de dilatation différents des matériaux de l'enveloppe et de la barre, il est nécessaire de prévoir un système permettant de réguler l'effort de compression sur l'enveloppe lors d'un changement de température. Il est connu de résoudre ce problème en mettant l'enveloppe en compression par l'intermédiaire d'organes élastiques tels que ressort à boudin, rondelles-ressorts, etc.. Ces organes, métalliques, sont le siège de courants de Foucault qui engendrent, lorsque l'intensité du courant dans la barre est élevée, des élévations de température qui ne sont pas tolérables.

Les problèmes techniques précités sont résolus selon l'invention comme il est indiqué ci-après.

L'invention a pour objet un disjoncteur tel que défini dans les revendications.

L'invention sera bien comprise à la lecture de la description d'un exemple de réalisation, en référence au dessin annexé dans lequel:
- la figure 1 est une vue en élévation d'un pôle d'un disjoncteur à enceinte métallique à la terre,
- la figure 2 est une vue agrandie montrant comment, selon l'invention, est réalisée la liaison entre les conducteurs de traversée et la chambre de coupure,
- la figure 3 est une vue en élévation d'une partie d'une traversée avec un organe de compensation selon l'art antérieur,
- la figure 4 est une vue en élévation d'une partie d'une traversée avec un organe de compensation selon l'invention.

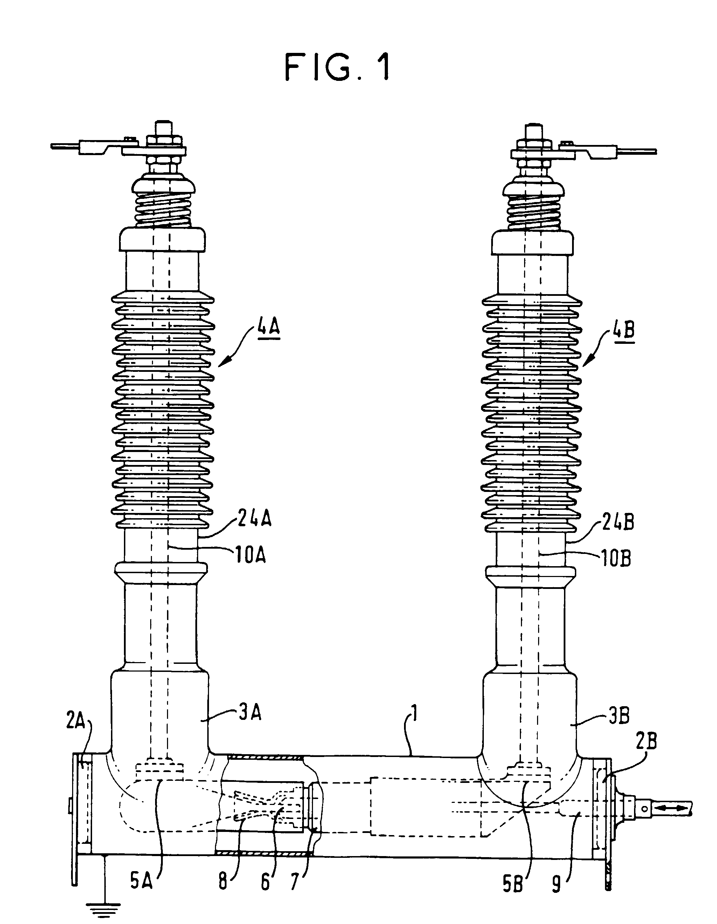

Dans la Fig.1, on a représenté schématiquement en élévation un pôle d'un exemple d'un disjoncteur à enceinte métallique à la terre. Cette enceinte comprend une enveloppe métallique cylindrique 1 munie de deux flasques d'extrémité 2A et 2B. Les extrémités de l'enveloppe sont pourvues chacune d'une virole; ces viroles, référencées 3A et 3B, servent de support à des traversées électriques isolantes référencées dans leur ensemble 4A et 4B.

A l'intérieur de l'enceinte métallique 1A-1B se trouve la chambre de coupure comprenant deux pièces cylindriques fixes 5A et 5B servant à recevoir le courant respectivement des traversées 4A et 4B et à servir de support aux pièces de contact du disjoncteurs. Ces pièces étant bien connues et ne faisant pas partie de l'invention, elles n'ont été qu'esquissées en traits interrompus: on peut néanmoins observer le contact fixe 6 coopérant avec le contact mobile 7 et la buse de soufflage 8. Le flasque 2B est traversé de manière étanche par une tringle de manoeuvre 9 reliée à une commande non représentée.

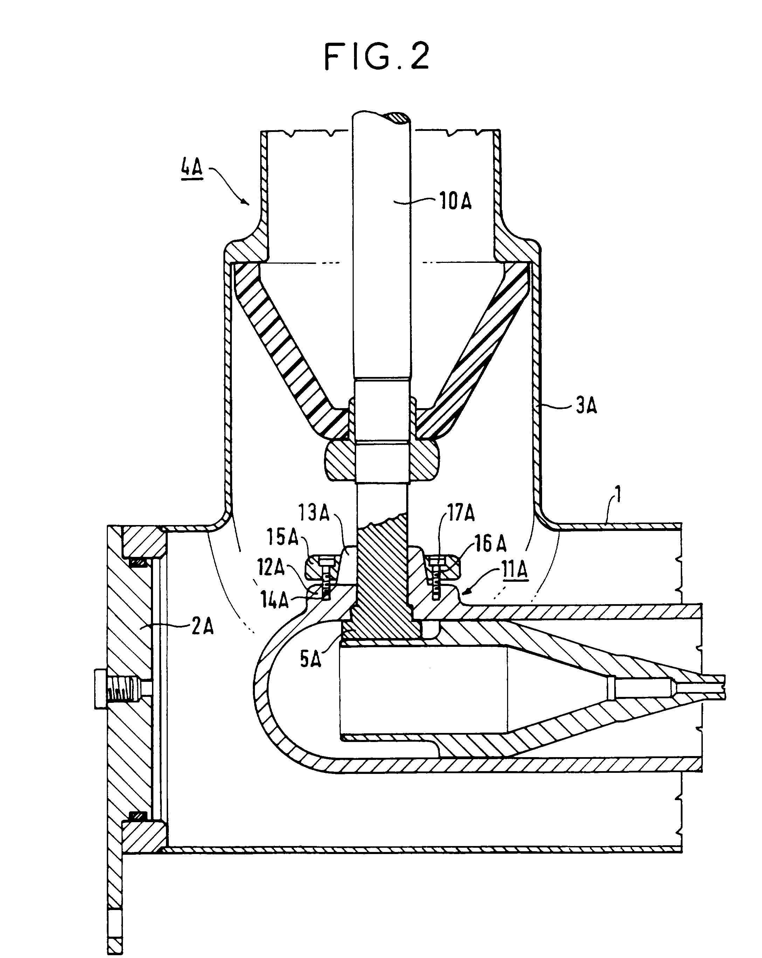

On se référera maintenant à la Fig. 2 qui montre en détail comment le conducteur de la traversée 4A est fixé au cylindre 5A portant les contacts fixes.

Le conducteur de la traversée 4A est une tige métallique 10A. Le cylindre 5A comprend une pièce métallique 11A comprenant une portion annulaire 12A surmontée d'une portion conique déformable 13A; ces portions comportent un trou central de diamètre voisin de celui de la tige 10A. La pièce métallique 11A est de préférence venue de fonderie avec l'enveloppe 1, mais peut, en variante, être rapportée et soudée. La portion annulaire 12A comprend des alésages borgnes filetés 14A disposés régulièrement autour du trou central. La déformation de la portion conique est assurée par exemple par des fentes pratiquées selon des plans axiaux dans la partie conique 13A.

La tige métallique 10A est engagée dans la piècesupport 11A.

Une couronne 15A, comprenant un diamètre intérieur conique est engagé autour de la tige 10A. Cette couronne est munie d'alésages périphériques 16A dont le nombre et la répartition coïncident avec les alésages filetés 14A de la portion annulaire 12A.

En plaçant des vis 17A dans les alésages 14A et 16A et en vissant, on provoque le déplacement de la couronne 15A qui se rapproche de la portion annulaire 12A en venant déformer la portion conique 13A. Cette déformation produit le serrage de la partie conique 13A autour de la tige 10A.

On note que la tige 10B est fixée au cylindre 5B d'une manière identique à celle qui vient d'être décrite.

Le serrage entre les tiges et les portions coniques est très fort, de sorte que les résistances électriques de contact sont faibles; les pièces actives de la chambre de coupure peuvent ainsi être suspendues aux tiges, ce qui permet de faire l'économie de pièces supports. Le montage est très simple de sorte que les règlages, en particulier celui de l'orientation des pièces de coupure dans l'enveloppe, est facilité.

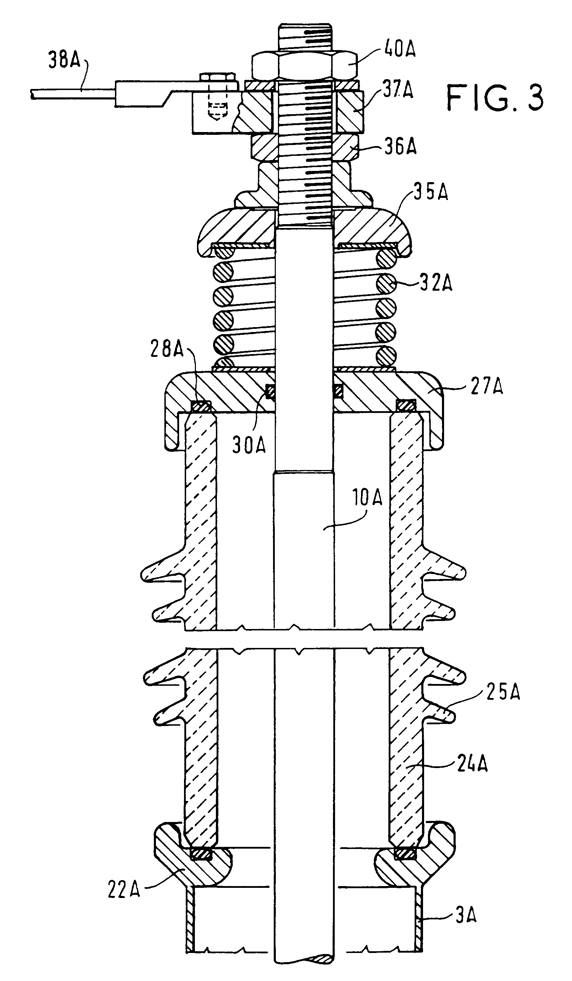

La Fig. 3 montre la structure d'une traversée. On a choisi comme exemple la traversée 4A; la traversée 4B est identique et les éléments homologues recoivent les même numéros de référence, mais avec la lettre B.

La traversée 4A est remplie de gaz d'isolement.

L'extrémité de la virole 3A est terminée par une bride 22A possédant une partie annulaire plate. Sur cette partie annulaire plate vient en appui étanche grâce à un joint 23A une colonne isolante 24A, par exemple en céramique ou en composite, munie d'ailettes 25A. L'extrémité supérieure de la colonne isolante est munie d'un chapeau métallique 27A en appui étanche grâce à un joint 28A. Le chapeau 27A est traversé de manière étanche par la tige 10A, grâce à un joint 30A. L'appui de la colonne 24A sur la bride 22A est assuré par un ressort 32A et comprimé entre le chapeau 27A et un couvercle 35A poussé par un écrou 36A vissé sur l'extrémité filetée de la tige 10A.

La Fig. 3 montre également la prise de courant 37A reliée à un conduscteur 38A et maintenue par un écrou 40A.

En cas de dilatation différentielle entre la tige 10A et la colonne isolante 24A, les ressorts assurent une pression suffisante.

Le ressort, réalisé en métal, peut être le siège de courant de Foucault dus au champ magnétique alternantif créé par le passage du courant dans la tige 10A.

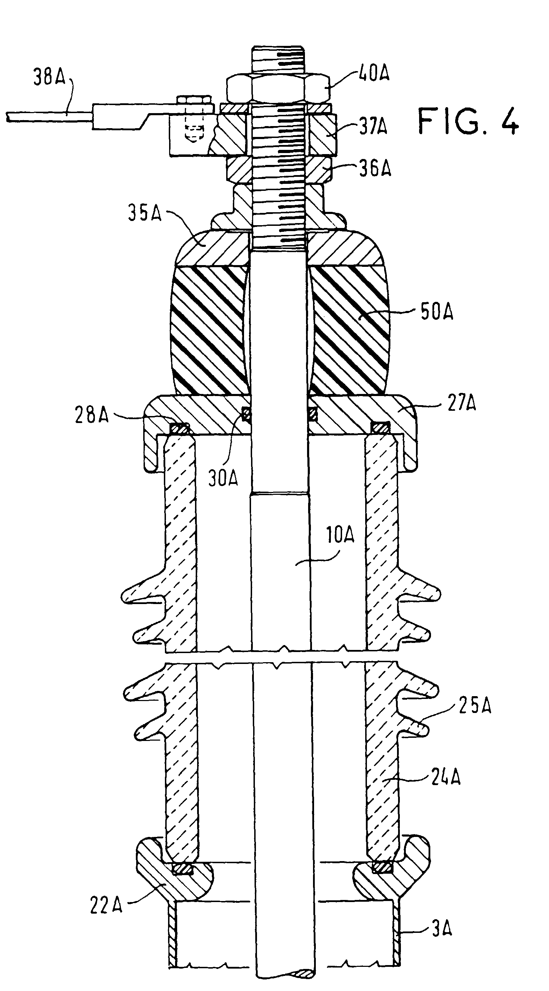

C'est la raison pour laquelle, selon l'invention, et comme il est illustré dans la Fig.4, le ressort 32A est remplacé par un bloc 50A en élastomère. On choisit de préférence un élastomère dont le module d'Young est constant dans une gamme étendue de températures, par exemple de -50°C à + 100°C. L'élastomère devra en outre être le siège d'un fluage réduit sous effort.

Grâce au choix précité, les courants de Foucault et les échauffements qui en résultent sont supprimés. Le coût de la pièce est faible et son montage nécessite un nombre d'éléments plus faible que selon l'art connu; il en résulte une économie appréciable sur la fourniture et sur la main d'oeuvre

L'invention s'applique à la réalisation de disjoncteur de type à enveloppe métallique à la terre dans des gammes de tension s'étendant de 40 à 800 kV.

## Revendications

1. Disjoncteur à enceinte métallique à la terre comprenant, pour chaque pôle, une enceinte métallique (1A-1B) munie de deux traversées isolantes (4A, 4B), l'enceinte et les traversées étant remplie d'un gaz d'isolement, l'enceinte contenant un premier (5A) et un second (5B) supports métalliques supportant respectivement un ensemble (6) de contacts fixes et un ensemble (7) de contacts mobiles, les traversées comprenant chacune un conducteur métallique (10A, 10B) entouré d'une enveloppe isolante (24A, 24B), caractérisé en ce qu'à chacun desdits premier (5A) et second (5B) supports métalliques est fixée une pièce métallique (11A) comprenant une portion annulaire (12A) surmontée d'une portion conique (13A) déformable, ladite pièce métallique possédant un alésage axial dans lequel est engagé ledit conducteur de traversée (10A), une couronne (15A), ayant une surface intérieure conique et complémentaire de celle de ladite portion conique (13A) étant vissée sur ladite portion annulaire (12A).

2. Disjoncteur selon la revendication 1, caractérisé en ce que ladite portion annulaire (12A) est munie d'alésages borgnes filetés (14A), ladite couronne étant munie d'alésages (16A) disposés en nombre égal et dans la même disposition que lesdits alésages borgnes filetés (14A), le vissage de ladite couronne étant réalisé au moyen de boulons (17A).

3. Disjoncteur selon l'une des revendications 1 et 2, caractérisé en ce que la déformabilité de ladite portion conique (13A) est assurée par des fentes pratiquées selon des plans radiaux.

4. Disjoncteur selon l'une des revendications 1 à 3, caractérisé en ce que les colonnes isolantes (24A, 24B) sont maintenues en pression par l'intermédiaire de pièces (50A) en élastomère.

## Patentansprüche

1. Leistungsschalter mit geerdeter Metallkapsel, der für jeden Pol eine mit zwei isolierenden Durchführungen (4A, 4B) versehene Metallkapsel (1A-1B) umfasst, wobei die Kapsel und die Durchführungen mit einem Isoliergas gefüllt sind, die Kapsel einen ersten (5A) und einen zweiten (5B) metallischen Träger enthält, die eine Anordnung (6) von ortsfesten Kontakten bzw. eine Anordnung (7) von beweglichen Kontakten tragen, und die Durchführungen jeweils einen von einer isolierenden Hülle (24A, 24B) umgebenen metallischen Leiter (10A, 10B) umfassen, dadurch gekennzeichnet, dass an jedem der ersten (5A) und zweiten (5B) metallischen Träger ein Metallteil (11A) befestigt ist, das einen ringförmigen Abschnitt (12A) mit einem darüberliegenden verformbaren kegelförmigen Abschnitt (13A) umfasst, wobei das Metallteil eine axiale Bohrung besitzt, in die der Durchführungsleiter (10A) eingeführt ist, und ein Kranz (15A) mit einer kegelförmigen inneren Oberfläche, die zu der des kegelförmigen Abschnitts (13A) komplementär ist, an dem ringförmigen Abschnitt (12A) verschraubt ist.

2. Leistungsschalter nach Anspruch 1, dadurch gekennzeichnet, dass der ringförmige Abschnitt (12A) mit Sack-Gewindebohrungen (14A) versehen ist und der Kranz (15A) mit Bohrungen (16A) versehen ist, die in gleicher Zahl und gleicher Anordnung wie die Sack-Gewindebohrungen angeordnet sind, wobei die Verschraubung des Kranzes mit Hilfe von Gewindebolzen/Schrauben (17A) realisiert ist.

3. Leistungsschalter nach Anspruch 1 oder 2, dadurch gekennzeichnet, dass die Verformbarkeit des kegelförmigen Abschnitts (13A) durch in radialen Ebenen gebildete Schlitze gewährleistet ist.

4. Leistungsschalter nach einem der Ansprüche 1 bis 3, dadurch gekennzeichnet, dass die isolierenden Säulen (24A, 24B) über Elastomerteile (50A) unter Druck gehalten werden.

## Claims

1. Grounded metal enclosure circuit-breaker comprising, for each pole, a metal enclosure (1A-1B) having two insulative bushings (4A, 4B), the enclosure and the bushings being filled with insulative gas, the enclosure containing first (5A) and second (5B) metal supports and a set (6) of fixed contacts and a set (7) of mobile contacts respectively supported by said first (5A) and second (5B) metal supports, the bushings each comprising a metal conductor (10A, 10B) surrounded by an insulative covering (24A 24B), characterized in that each of said first (5A) and second (5B) metal supports has fixed to it a metal part (11A) having an annular portion (12A) surmounted by a deformable conical portion (13A), said metal part having an axial bore in it into which said bushing conductor (10A) is inserted, a ring (15A) having a conical interior surface complementary to that of said conical portion (13A) being screwed onto said annular portion (12A).

2. Circuit-breaker according to claim 1, characterized in that said annular portion (12A) comprises blind screwthreaded holes (14A) and said ring comprises the same number of holes (16A) in the same arrangement as said blind screwthreaded holes (14A), said ring being screwed on by means of bolts (17A).

3. Circuit-breaker according to claim 1 or claim 2, characterized in that said conical portion (13A) is rendered deformable by slots in radial planes.

4. Circuit-breaker according to any one of claims 1 to 3, characterized in that the insulative columns (24A, 24B) are compressed by elastomer members (50A).
